# EUROPEAN PATENT SPECIFICATION

(11) **EP 1 887 660 B1**
(45) Date of publication and mention of the grant of the patent: **23.02.2011**
(21) Application number: 07252474.7
(22) Date of filing: 18.06.2007
(51) Int. Cl.: H01R 9/24, H01R 4/70

(54) **Seal for electrical connector block**
Dichtung für eine elektrische Anschlussleiste
Joint pour bloc connecteur électrique

(30) Priority: 16.06.2006 GB 0611999
(43) Date of publication of application: 13.02.2008
(73) Proprietor: Greenwood Air Management Limited, Rustington West Sussex BN16 3LF (GB)
(72) Inventor: Croke, Anthony Laurence, Rustington West Sussex BN16 3LF (GB)
(74) Representative: Piésold, Alexander James

(56) References cited:
- WO-A-2004/075358
- DE-U- 1 940 257
- DE-U1-202005 001 729
- GB-A- 1 022 335
- GB-A- 2 405 267
- US-A1- 2003 087 552

## Description

The invention relates to a seal for an electrical connector block. More particularly, the invention relates to a waterproof seal for a standard "chocolate-block" connector and to a low-profile version of the "chocolate-block" connector.

Electrical appliances are sometimes used in environments where water is present, for example an extractor fan in a kitchen, bathroom or shower. In such cases, where the appliance is likely to be sprayed with water, the electronics are susceptible to shorting which could be dangerous to the user or damaging to the appliance. It is therefore desirable to protect the electrical parts of the appliance from coming into contact with water.

For electronics in an appliance which are installed in the factory and do not need to be accessed by the user for installation or use, the easiest way to waterproof the components is to cover them with a non-conducting resin. Alternatively, the components can be sealed within a waterproof housing. However, such techniques are not appropriate for components which need to be accessed by the user. For example, in the case of an extractor fan for use in a shower room, the user needs to make electrical connections to power the fan from the mains electricity supply. Such connections may include for example one or more of: a live connection, a neutral connection, a switch live connection and an earth connection.

Such connections are commonly made using a "chocolate block" connector in which two electrical conductors (e.g. wires) are inserted into a central cavity which houses a conductive portion made from conducting material such as brass or copper, and a fixing screw is screwed down onto the two conductors so as to secure them in electrical contact with the conductive portion and thereby electrically connect the two conductors.

Some chocolate block connectors are provided with a single screw which traps both conductors in the conductive portion in the cavity. Other chocolate block connectors are provided with a separate screw for each conductor so that the conductors can be individually fixed and released.

Chocolate block connectors are particularly useful in appliances where factory-installed electronics are to be connected by the user to a power supply. The connections from the factory-installed electronics can be inserted into one side of the connector and fixed in place by a screw. Then all that remains for the user is to insert the connections from the power supply into the other side of the connector and tighten the screw to fix the connections in place. It is desirable to make the user's tasks as simple as possible so that the device can be installed quickly and easily, and without time-consuming or intricate operations.

In an alternative connector, similar to the standard chocolate block connector, the connections made on the factory side are soldered onto conducting plates on the outside of the connector. The plates extend into the connector so as to be electrically connected to the conductive portion in the cavity of a chocolate block connector. The user inserts an electrical conductor into the cavity and secures it in place with a screw in the same manner as for a standard connector.

As discussed above, such connections are required on appliances such as extractor fans which are for use in environments (e.g. the kitchen or bathroom) in which water may be sprayed or splashed onto the appliance. In such cases it is necessary to protect the electrical connections, including those made by the user, from contact with water. It is particularly desirable to provide enough water protection that the appliance can be given an Ingress Protection rating of IPX4, i.e. there is limited ingress of water sprayed from any direction.

Such connectors have previously been protected from water by using raised walls or caps to redirect the water away from the connector. However, the appliance cannot then be given a water resistance rating as the water resistance is dependent on the user fitting the connector correctly into the protected area after making the electrical connections. It is desirable to have an appliance in which the connector is reliably protected, so that the appliance can be given a water resistance rating straight out of the factory.

US 2003/0087552 describes a seal for an electrical connector of the bus-bar type in which cable receiving apertures are sealed by cable size adapters and set screw apertures are sealed by sealing plugs. The cable size adapters and the sealing plugs are initially formed as a single unit, attached to the main seal body by a tether. The sealing plugs may be fitted while still attached to the tether, but the cable size adapters are severed from the tether before being installed in a sealing manner around the cables.

GB 2405267 describes a seal for an electrical connector of the chocolate block type. The seal is formed by connecting two halves together in a sealing manner so that they completely surround the connector block. The seal halves each have an entry hole for ingress of wiring into the interior of the seal.

Therefore, according to the invention, there is provided a seal for an electrical connector block of the type in which a first electrical wire is secured in electrical contact with a second electrical wire by means of a releasable fixing means, the seal comprising: a first portion for sealing around the first electrical wire, a second portion for sealing around the second electrical wire, and a third portion for covering the fixing means, wherein the first, second and third portions are formed as a single unit, and wherein the first, second and third arm portions are each formed as foldable arms.

By providing portions which seal around the electrical wires, the seal of the invention can consistently prevent ingress of water into the openings of the cavity of the connector block into which the electrical wires are inserted. A third sealing portion is also provided to cover the releasable fixing means which is used to secure the electrical wire(s). Thus, to make the user-side connections, the user only needs to arrange the relevant sealing portion around the user-side electrical wire and to arrange the third sealing portion to cover the releasable fixing means.

Separate sealing portions are preferably provided for the factory side and the user side so that the seal which is made around the factory-made connections does not need to be removed from the sealing position in order for the user to make connections.

Forming the first, second and third portions as a single unit makes the moulding process a lot simpler and keeps the various portions together and in the correct orientation so that there is less likelihood of them getting lost or installed incorrectly. As one portion of the seal will preferably be installed in the factory, the remaining portions will already be correctly orientated for the user.

In general, the electrical wires to be connected by the block have a conducting core enclosed in an insulating sleeve. With such electrical wires, the first and second sealing portions will engage around the respective insulating sleeves of the first and second electrical wires.

As the first, second and third portions are formed as foldable arms, they can then easily be folded with respect to one another which makes for much easier installation of the sealing portions into the connector. Once one portion has been installed in the factory, the other two portions can be folded out so that the connections can be made and the fixing means can be accessed. These portions can then be folded back in to the sealing positions. Preferably a narrowing of the seal material is formed along the fold joint so as to allow the arms to fold. In one preferred embodiment, the narrowing is a V-shaped groove. The V-shaped groove may be formed at 45 degrees to the surface of the seal body so as to allow a 90 degree fold.

As discussed above, it is desirable to minimise the amount of work which needs to be done to make the connections and it is also desirable to keep the seal in the sealing position. Therefore, preferably the first portion has a hole through which the first electrical wire is inserted in use. By having a hole through which the electrical wire is inserted, the first portion does not need to be removed from the connector block in order to make the electrical connection. Instead, the first portion remains in the sealing position on the connector block and the electrical wire is pushed through the hole into the cavity in the connector block. Preferably, to secure the electrical wire, the third portion of the seal is lifted in order to access the releasable fixing means which is operated so as to secure the electrical wire in the connector before replacing the third portion of the seal.

The user will generally ensure that the electrical wire is protected from water outside of the connector block. For example in the case where the electrical wire has a conducting core and a plastics insulation sleeve, a short portion of insulation would be stripped away at the end of the wire which is to be inserted into the connector block to make the electrical contact, but this stripped portion would not extend through the seal portion. Rather, the seal portion would engage round the insulating sleeve.

In order to make a good watertight seal around the electrical wire, the hole is preferably formed slightly smaller than the electrical conductor so as to ensure a tight fit. Any size of hole may be selected according to the wire which is to be used. However, the most common type of electrical wire used in making mains power supply connections to appliances is single core wire of about 2.5 mm diameter. Therefore, preferably the_hole in the first portion has a diameter which is less than 2.5 mm. More preferably, the hole in the first portion has a diameter which is less than 2 mm.

A standard chocolate block connector takes its inputs in the same form, e.g. two wires each inserted into the connector from opposite sides. Therefore the same advantages apply to the second portion of the seal and in a preferred embodiment of the invention, the second portion has a hole through which the second electrical wire is inserted in use. To make an electrical connection with this connector between the first electrical wire and the second electrical wire, the first electrical wire is pushed through the hole in the first seal portion and the second electrical wire is pushed through the hole in the second seal portion. Then the third seal portion is preferably lifted so as to provide access to the releasable fixing means which can be operated to secure the electrical wires in electrical contact before the third seal portion is replaced in the sealing position. Preferably the hole in the second portion has a diameter which is less than 2.5 mm. More preferably, the hole in the second portion is less than 2 mm in diameter.

A connector block typically comprises an electrically conductive portion in a cavity into which the first and second electrical wires are inserted so that when the electrical wires are held in place against the inside of the cavity, they are electrically connected together. Alternatively, the first and second electrical connectors can be inserted into separate cavities which are electrically connected together. However, for the purposes of this description, these cavities will be treated as being one and the same. The first and second electrical wires are typically held in place against an inside conductive wall of the cavity by a releasable fixing means. This can be a screw which is screwed onto the wires to squeeze them against the side of the cavity, or it can be a spring which biases the wires against the side of the cavity. Other releasable fixing means are also possible so long as they hold the two wires in reliable electrical contact. As mentioned previously, the first and second electrical wires may be held in electrical contact with the conductive portion in the cavity by the same releasable fixing means or they may each be held by a separate releasable fixing means. The whole connector block is usually surrounded by plastics material so as to insulate the connector from surrounding components. This plastics surround is formed around the connector cavity and is also formed into a turret extending away from the cavity and surrounding the releasable fixing means, whilst allowing access to the releasable fixing means through an opening in the top of the turret. The parts of the connector block that require protection from water ingress are therefore the two openings into the cavity and the opening in the top of the turret which holds the releasable fixing means.

In a preferred embodiment, at least one of the first and second sealing portions has a projecting portion for fitting in a sealing manner into a cavity of the connector block. The projecting portion should be shaped so as to form a tight fit around the perimeter of the opening into the cavity, thereby creating a seal. The projecting portion may be formed slightly larger than the opening so as to ensure a tight fit. Preferably the projection is in the form of a rib. This allows the projecting portion to deform slightly inwards as it is pushed into the cavity, making the insertion easier. It also reduces the amount of material required to make the seal. In one preferred embodiment, both the first and second portions have projecting portions for fitting in a sealing manner into the cavity of the connector block.

In an alternative type of electrical connector, instead of having both electrical wires inserted into a cavity and secured in place, one side of the connector is formed with a connector plate to which one of the electrical wires is soldered. The connector plate is electrically connected to a conductive portion in the cavity which operates in the same manner as a standard chocolate block connector, i.e. the other electrical wire is inserted into the cavity and is secured in place by a releasable fixing means. Making one of the electrical contacts by soldering to a plate allows a more reliable electrical connection to be made on one side of the connector and allows a smaller connector block to be used as a smaller cavity is required to receive the other electrical connector on its own. Therefore, in one preferred embodiment of the invention, at least one of the first and second portions is formed with a projection in the shape of a sleeve for covering a connector plate of the connector block. In use, this sleeve seals around the connector plate and the electrical wire which is soldered to it and so prevents water from coming into contact with the conducting portions of the connector.

As described above, the releasable fixing means of standard connector blocks (or of smaller connector blocks having a connector plate on one side), are typically housed in a plastics turret of the connector block which is open at one end so that the releasable fixing means may be operated by the user. For example, where the releasable fixing means is a screw, a screwdriver may be inserted into the opening of the turret to turn the screw which squeezes the electrical wire(s) against the inside of the cavity. Therefore, preferably the third sealing portion is formed with a projection for fitting in a sealing manner into a turret of the connector block in which the fixing means is recessed. As with the first and/or second sealing portions above, the projecting portion may be formed slightly larger than the opening in the turret in order to ensure a tight fit, and it may be formed as a rib.

Where the connector block is of the type which uses a separate releasable fixing means for each of the electrical wires, it generally has two turrets, one for each releasable fixing means. Therefore in another preferred embodiment of the invention, the third sealing portion is formed with two projections which are formed to fit in a sealing manner into two turrets of the connector block in which separate fixing means are recessed.

The seal is preferably formed from an elastomeric material such as rubber so that it can deform slightly and accommodate small variations in the size and shape of the objects to which it seals.

Chocolate block connectors are so called because they are often sold in blocks of 10 or 12. The number of connectors which is required for a given application varies considerably and so the user may choose how many connectors are needed and break off that number from the block. In the same manner, the seal of the present invention may have extended arms with repetitions of the various projections and holes as described above. The seal may then seal several connector blocks and their respective electrical wires. If desired, the user may cut off the parts of the seal portions which are not to be used.

Whilst the invention has been described above in relation to the seal only, it also applies to a connector block sealed by a seal as described above, and to an electrical appliance such as an electric extractor fan having a connector block sealed by such a seal.

Preferred embodiments of the invention will now be described, by way of example only, and with reference to the accompanying drawings in which:
Figure 1 shows a first embodiment of a seal according to the invention installed on a standard connector block;
Figure 2 shows the seal of the first embodiment and the connector block in an exploded view;
Figure 3 shows a second embodiment of a seal according to the invention in an unfolded state from one side;
Figure 4 shows the second embodiment of the invention in an unfolded state from the other side;
Figures 5A and 5B show a low profile connector block for use with the second embodiment;
Figure 6 shows a low profile connector block with a seal of the second embodiment partly installed thereon.

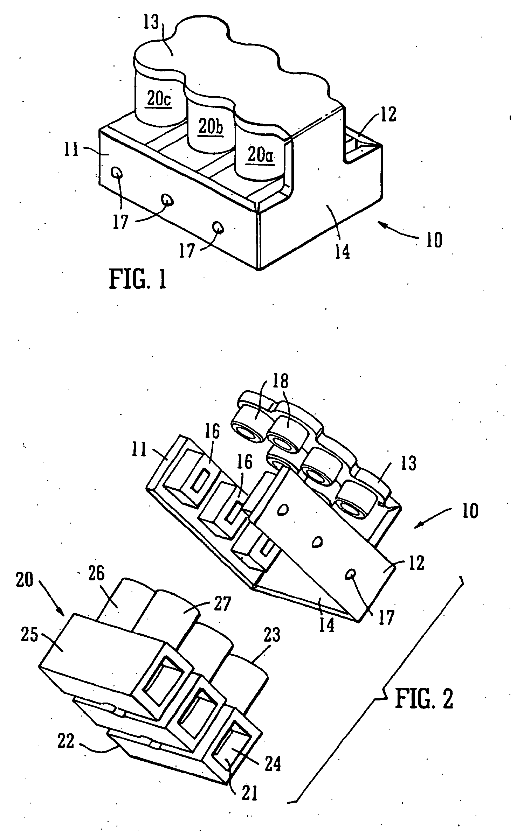

Figures 1 and 2 show a connector block 20 of the standard chocolate block type. The connector block 20 shown comprises three individual connectors 20a, 20b, 20c which have been broken off from a larger block. Each of these connectors operates in the same manner and so only one will be described below. In a connector 20a, first and second electrical wires (not shown) are inserted into each end of the central cavity 24. Each electrical wire is held against the inside wall of an electrically conductive portion in the cavity 24 by means of first and second screws (not shown) which act as releasable fixing means. The connector 20a is surrounded by a plastics housing 25 which includes first and second turrets 26 and 27 for housing the first and second screws. The openings in the connector 20a which need to be sealed against water ingress are the openings 21, 22 at each end of the central cavity 24 and the openings 23 at the top of the turrets 26, 27. In figure 1, the connector block 20a is shown with a seal 10 sealing all of these openings 21, 22, 23. In figure 2, the seal 10 and connector block 20a are shown separated so that the seal 10 can be seen in more detail.

The seal 10 has first and second portions 11 and 12 for sealing the ends of the cavity 24. The seal 10 also has a third portion 13 for sealing the openings 23 in the tops of the turrets 26, 27. The first, second and third portions 11, 12, 13 are formed as arms extending from a body 14. The body 14 is substantially the same shape as the side of the connector 20a so that the arms 11, 12, 13 can be folded into the openings 21, 22, 23 on the sides and the top of the connector 20a. The folds in the arms are achieved by a portion of the seal 10 between the body 14 and the arm 11, 12, 13 being made narrower than the rest of the seal 10. This narrowing is in the form of a V-shaped groove with its sides at 45 degrees to the surface of the seal. When the arms are folded, these 45 degree slopes butt against one another so that the arm is at 90 degrees to the body.

The first and second arms 11, 12 of the seal 10 are for sealing the openings 21, 22 at either end of the cavity 24 of the connector 20a. Each arm 11, 12 is formed with a projection 16 which in use is fitted into the opening 21, 22 of the cavity 24. The cross-section of the projection 16 matches the cross-section of the opening 21, 22 so as to create a tight fit between the two when the projection 16 is inserted into the cavity 24. The projection 16 is also formed very slightly larger than the opening 21, 22 to ensure a tight fit. The projection 16 is in the form of a rib which follows the perimeter of the cavity opening 21, 22. The rib allows the projection 16 to deform slightly inwardly from the perimeter of the opening 21, 22 and thus accommodates slight differences in size and shape of the cavity 24 caused by manufacturing tolerances.

A hole 17 is formed through the arm 11, 12 at the centre of the projection 16. This hole 17 is for insertion of an electrical wire (not shown) into the cavity 24 of the connector 20a. The hole 17 may be of various sizes to accommodate different gauges of wire. The hole 17 is very slightly smaller in diameter than the wire which it is intended to receive in order to ensure a tight fit around the wire and thus prevent water ingress. The wire will usually consist of a conducting core enclosed in an insulating sleeve.

The first and second arm portions 11, 12 of the seal 10 can be fitted into the connector 20a before use and they do not need to be removed from the sealing position in order to make the electrical connection between the first and second wires. In use, first and second insulated wires have a short end portion of the insulation stripped away to reveal the conducting core. The wires are then pushed through the holes 17 in the first and second arm portions 11, 12 of the seal 10 so that the bared conducting ends are wholly inside the cavity 24. The third arm portion 13 is lifted out of the openings 23 at the top of the turrets 26, 27 and the screws are screwed down onto the wires to make electrical connection between the wires and the cavity 24. The third arm portion 13 is then replaced to seal the top openings 23 of the turrets 26, 27. The third arm portion is also formed with projections 18 which fit into the openings 23 in the top of the turrets 26, 27 in the same fashion as the projections 16 fit into the openings 21, 22.

The seal 10 for sealing the connector block 20 is designed to cover three individual connectors 20a, 20b, 20c as in the connector block shown. Each arm is therefore provided with three projections 16, 18 (one for each individual connector 20a, 20b, 20c) so that all of the openings 21, 22, 23 of the whole connector block 20 are sealed. It will be immediately apparent however, that the seal 10 could easily be adapted for use with more than three or fewer than three individual connectors 20a, 20b, 20c simply by adding or removing the repeated components on each of the arms 11, 12, 13.

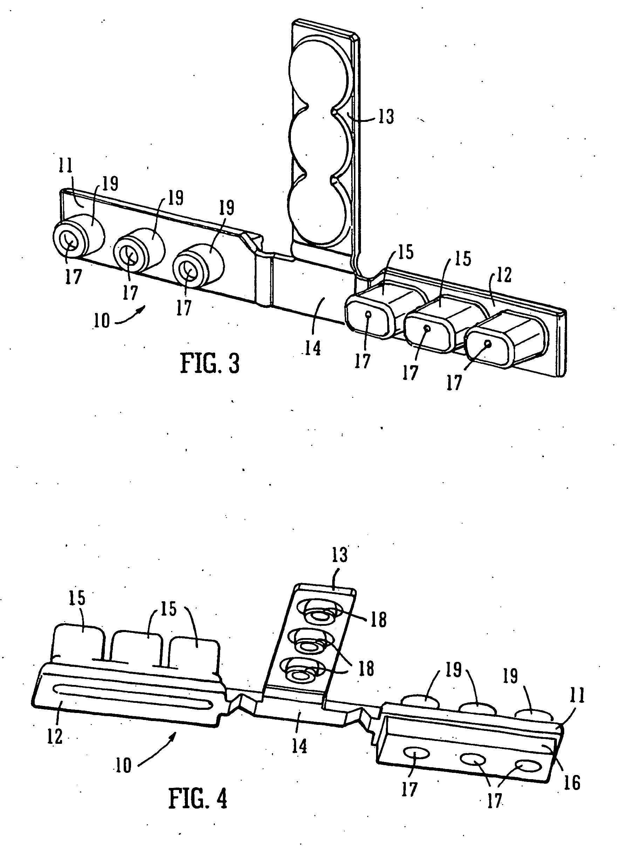

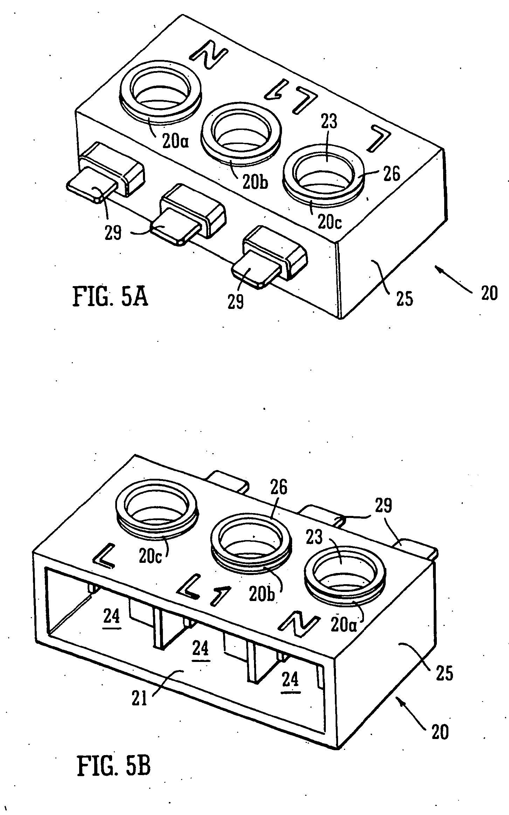

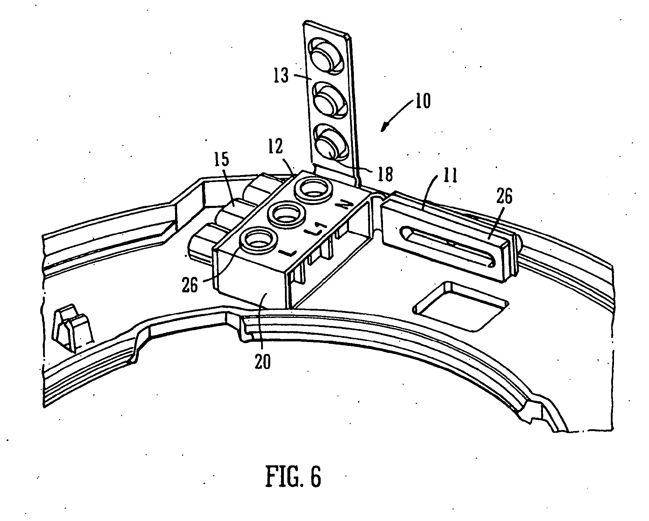

Figures 3 and 4 show a second embodiment of a seal 10 according to the invention. Figure 3 shows one side of the seal 10, while figure 4 shows the opposite side of the seal 10. The second embodiment of the seal 10 is suitable for sealing a connector 20 of the type shown in figures 5a and 5b. The seal 10 is shown partly installed on the connector 20 in figure 6.

Referring first to figures 5a and 5b, the connector 20 comprises three individual connectors 20a, 20b, 20c. For simplicity only one individual connector 20a will be described below. One side of the connector 20a operates in the same way as the connector of the first embodiment described above, i.e. an electrical wire is inserted through an opening 21 into the cavity 24 and is secured in electrical contact with the wall of the cavity 24 by a screw which is inserted through the opening 23 in the top of turret 26. This connector of the second embodiment is a low profile connector for use in appliances where space is restricted. Therefore a much smaller turret 26 and a correspondingly shorter screw is used. On the opposite side of the connector 20, instead of having a second opening into the cavity 24 and a second fixing means, the connector 20 of the second embodiment is provided with a conducting plate 29 onto which the second electrical conductor can be soldered. The conducting plate is electrically connected to the wall of the cavity 24 and so a wire soldered onto the plate 29 will be electrically connected to a wire fixed in the cavity 24 by the screw. Wires can be soldered onto the plate 29 in the factory when an appliance is being built. The user can then make connections by fixing a wire into the cavity 24 using the fixing screw.

Figures 3 and 4 show a seal 10 for sealing a connector 20 according to the second embodiment. The first arm portion 11 operates in the same manner as described above in relation to the first embodiment. As the connector 20 of this embodiment is specially designed with three connectors 20a, 20b, 20c in the same unit rather than broken off a larger block as is the case with a chocolate block connector, a single projection 26 fits into a single opening 21 in the connector 20. This opening 21 provides access to three cavities 24 of the individual connectors 20a, 20b, 20c. Holes 17 are provided in the first arm portion 11 for wires to be pushed through into the cavities 24. Because of the smaller design of this low profile connector 20 and seal 10, cylinders 19 are formed around the holes 17 in the first arm portion. These cylinders 19 provide a sufficient depth of sealing material for cinching around the wires and providing a watertight seal.

The second arm portion 12 is provided with sleeves 15 for covering the conducting plates 29. Each sleeve 15 is provided with a hole 17 through which a wire can be pushed. To install this seal 10 on the connector 20, wires must first be pushed through the holes 17 in the sleeves 15 of the second arm portion 12. The wires are then soldered onto conducting plates 29 and then the sleeves 15 are slid up the wires and over the conducting plates 29 so as to seal the plates 29 from contact with water. The seal 10 will then be in the position shown in figure 6.

The first and third arm portions 11, 13 work in the same way as in the first embodiment. The first arm portion 11 is folded so that the projection 16 fits snugly in the opening 21 and the third arm portion 13 is folded down so that the projections 18 fit snugly in the openings 23 in the tops of the turrets 26. The seal 10 can be fully fitted in this manner in the factory. When the user wants to make electrical connections (e.g. to supply power to the appliance), the third arm portion 13 is lifted and the screws loosened, then wires are pushed through the holes 17 in the first arm portion 11 and the screws are tightened to make secure electrical contact between the wires and the conductive portions in the cavities 24 (and therefore with the conducting plates 29 and the wires soldered thereto). The third arm portion 13 is then folded back into the sealing position to reseal the connector 20. Thus the first and second arm portions 11, 12 do not need to be removed from the sealing position in order to make the electrical connections.

## Claims

1. A seal (10) for an electrical connector block (20) of the type in which a first electrical wire is secured in electrical contact with a second electrical wire by means of a releasable fixing means, the seal (10) comprising:
a first portion (11) for sealing around the first electrical wire,
a second portion (12) for sealing around the second electrical wire, and
a third portion (13) for covering the fixing means,
wherein the first, second and third portions (11, 12, 13) are formed as a single unit wherein the third portion (13) is formed as foldable arm, and **characterised in that** the first and second portions (11, 12) are each formed as foldable arms.

2. A seal (10) as claimed in claim 1, wherein a narrowing of the seal material is formed along the fold joint so as to allow the arms (11, 12, 13) to fold.

3. A seal (10) as claimed in claim 2, wherein the narrowing is a V-shaped groove.

4. A seal (10) as claimed in claims 1, 2 or 3, wherein the first portion (11) has a hole (17) through which the first electrical conductor is inserted in use.

5. A seal (10) as claimed in claim 4, wherein the hole (17) in the first portion (11) has a diameter which is less than 2 mm.

6. A seal (10) as claimed in any preceding claim, wherein the second portion (12) has a hole (17) through which the second electrical conductor is inserted in use.

7. A seal (10) as claimed in claim 6, wherein the hole (17) in the second portion (12) has a diameter which is less than 2 mm.

8. A seal (10) as claimed in any preceding claim, wherein at least one of the first and second portions (11, 12) has a projecting portion (16) for fitting in a sealing manner into a cavity (24) of the connector block (20).

9. A seal (10) as claimed in claim 8, wherein the projection (16) is in the form of a rib.

10. A seal (10) as claimed in any preceding claim, wherein at least one of the first and second portions (11, 12) is formed with a projection (15) in the shape of a sleeve for covering a connector plate (29) of the connector block (20).

11. A seal (10) as claimed in any preceding claim, wherein the third portion (13) is formed with a projection (18) for fitting in a sealing manner into a turret (26, 27) of the connector block (20) in which the fixing means is recessed.

12. A seal (10) as claimed in any of claims 1 to 11, wherein the third portion (13) is formed with two projections (18) which are formed to fit in a sealing manner into two turrets (26, 27) of the connector block (20) in which separate fixing means are recessed.

13. A seal (10) as claimed in any of claims 10 to 14, wherein a plurality of projections (16) or sleeves (15) are provided on each of the first, second and third portions (11, 12, 13) for sealing a plurality of connectors (20).

14. A seal (10) as claimed in any preceding claim, wherein the seal (10) is made from an elastomeric material.

15. A connector block (20) sealed by a seal (10) as claimed in any preceding claim.

16. An electric extractor fan comprising a connector block (20) sealed by a seal (10) as claimed in any of claims 1 to 14.

## Patentansprüche

1. Dichtung (10) für einen elektrischen Verbindungssteckerblock (20) des Typs, bei dem ein erster elektrischer Draht in elektrischem Kontakt mit einem zweiten elektrischen Draht mittels einer lösbaren Befestigungseinrichtung befestigt ist, wobei die Dichtung (10) aufweist:
einen ersten Abschnitt (11) zum Abdichten um den ersten elektrischen Draht,
einen zweiten Abschnitt (12) zum Abdichten um den zweiten elektrischen Draht, und
einen dritten Abschnitt (13) zum Abdecken der Befestigungseinrichtung, wobei der erste, der zweite und der dritte Abschnitt (11, 12, 13) als eine bzw. einzelne Einheit ausgebildet sind, wobei der dritte Abschnitt (13) als Klapparm bzw. faltbarer Arm ausgebildet ist, und **dadurch gekennzeichnet, dass** der erste und der zweite Abschnitt (11, 12) jeweils als Klapparme bzw. faltbare Arme ausgebildet sind.

2. Dichtung (10) nach Anspruch 1, wobei eine Verschmälerung des Dichtungsmaterials entlang des Klappgelenks ausgebildet ist, um zu ermöglichen, dass die Arme (11, 12, 13) einklappen.

3. Dichtung (10) nach Anspruch 2, wobei die Verschmälerung eine V-förmige Nut ist.

4. Dichtung (10) nach den Ansprüchen 1, 2 oder 3, wobei der erste Abschnitt (11) ein Loch (17) aufweist, durch das der erste elektrische Leiter bei der Verwendung eingesetzt ist.

5. Dichtung (10) nach Anspruch 4, wobei das Loch (17) im ersten Abschnitt (11) einen Durchmesser aufweist, der geringer ist als 2 mm.

6. Dichtung (10) nach einem vorhergehenden Anspruch, wobei der zweite Abschnitt (12) ein Loch (17) aufweist, durch das der zweite elektrische Leiter bei der Verwendung eingesetzt ist.

7. Dichtung (10) nach Anspruch 6, wobei das Loch (17) im zweiten Abschnitt (12) einen Durchmesser aufweist, der geringer ist als 2 mm.

8. Dichtung (10) nach einem vorhergehenden Anspruch, wobei der erste und/oder der zweite Abschnitt (11, 12) einen vorstehenden Abschnitt (16) zum Einsetzen in abdichtender Weise in einen Hohlraum (24) des Verbindungssteckerblocks (20) aufweist.

9. Dichtung (10) nach Anspruch 8, wobei der Vorsprung (16) in Form einer Rippe vorliegt.

10. Dichtung (10) nach einem vorhergehenden Anspruch, wobei der erste und/oder der zweite Abschnitt (11, 12) mit einem Vorsprung (15) in Form einer Hülse zum Abdecken einer Verbindungssteckerplatte (29) des Verbindungssteckerblocks (20) ausgebildet ist.

11. Dichtung (10) nach einem vorhergehenden Anspruch, wobei der dritte Abschnitt (13) mit einem Vorsprung (18) zum Einsetzen in abdichtender Weise in eine Säule (26, 27) des Verbindungssteckerblocks (20) ausgebildet ist, in der die Befestigungseinrichtung versenkt ist.

12. Dichtung (10) nach einem der Ansprüche 1 bis 11, wobei der dritte Abschnitt (13) mit zwei Vorsprüngen (18) ausgebildet ist, die so ausgebildet sind, dass sie in abdichtender Weise in zwei Säulen (26, 27) des Verbindungssteckerblocks (20) passen, in denen separate Befestigungseinrichtungen versenkt sind.

13. Dichtung (10) nach einem der Ansprüche 10 bis 14, wobei mehrere Vorsprünge (16) oder Hülsen (15) an jedem des ersten, des zweiten und des dritten Abschnitts (11, 12, 13) zum Abdichten von mehreren Verbindungssteckern (20) vorgesehen sind.

14. Dichtung (10) nach einem vorhergehenden Anspruch, wobei die Dichtung (10) aus einem elastomeren Material besteht.

15. Verbindungssteckerblock (20), der durch eine Dichtung (10) nach einem vorhergehenden Anspruch abgedichtet ist.

16. Elektrisches Absauggebläse mit einem Verbindungssteckerblock (20), der durch eine Dichtung (10) nach einem der Ansprüche 1 bis 14 abgedichtet ist.

## Revendications

1. Joint (10) pour un bloc de connecteurs électriques (20) du type dans lequel un premier fil électrique est fixé en contact électrique avec un second fil électrique au moyen de moyens de fixation libérables, le joint (10) comportant :
une première partie (11) pour réaliser d'étanchéité autour du premier fil électrique,
une deuxième partie (12) pour réaliser l'étanchéité autour du second fil électrique, et
une troisième partie (13) pour recouvrir les moyens de fixation,
dans lequel les première, deuxième et troisième parties (11, 12, 13) se présentent sous la forme d'une seule unité, dans lequel la troisième partie (13) a la forme d'un bras pliable, et **caractérisé en ce que** les première et deuxième parties (11, 12) ont chacune la forme de bras pliables.

2. Joint (10) tel que revendiqué dans la revendication 1, dans lequel un rétrécissement du matériau de joint est formé le long de l'assemblage plié de manière à permettre un pliage des bras (11, 12, 13).

3. Joint (10) tel que revendiqué dans la revendication 2, dans lequel le rétrécissement est une gorge en forme de V.

4. Joint (10) tel que revendiqué dans les revendications 1, 2 ou 3, dans lequel la première partie (11) a un trou (17) à travers lequel le premier conducteur électrique est inséré en utilisation.

5. Joint (10) tel que revendiqué dans la revendication 4, dans lequel le trou (17) dans la première partie (11) a un diamètre qui est inférieur à 2 mm.

6. Joint (10) tel que revendiqué dans l'une quelconque des revendications précédentes, dans lequel la deuxième partie (12) a un trou (17) à travers lequel le second conducteur électrique est inséré en utilisation.

7. Joint (10) tel que revendiqué dans la revendication 6, dans lequel le trou (17) dans la deuxième partie (12) a un diamètre qui est inférieur à 2 mm.

8. Joint (10) tel que revendiqué dans l'une quelconque des revendications précédentes, dans lequel au moins une des première et deuxième parties (11, 12) a une partie en saillie (16) pour s'insérer de manière étanche dans une cavité (24) du bloc de connecteurs (20).

9. Joint (10) tel que revendiqué dans la revendication 8, dans lequel la saillie (16) a la forme d'une nervure.

10. Joint (10) tel que revendiqué dans l'une quelconque des revendications précédentes, dans lequel au moins une des première et deuxième parties (11, 12) est formée avec une saillie (15) ayant la forme d'un manchon pour recouvrir une plaque de connecteur (29) du bloc de connecteurs (20).

11. Joint (10) tel que revendiqué dans l'une quelconque des revendications précédentes, dans lequel la troisième partie (13) est formée avec une saillie (18) pour s'insérer de manière étanche dans un barillet (26, 27) du bloc de connecteurs (20), dans lequel les moyens de fixation sont évidés.

12. Joint (10) tel que revendiqué dans l'une quelconque des revendications 1 à 11, dans lequel la troisième partie (13) est formée avec deux saillies (18) qui sont formées pour s'insérer de manière étanche dans deux barillets (26, 27) du bloc de connecteurs (20), dans lequel des moyens de fixation séparés sont évidés.

13. Joint (10) tel que revendiqué dans l'une quelconque des revendications 10 à 14, dans lequel une pluralité de saillies (16) ou de manchons (15) est agencée sur chacune des première, deuxième et troisième parties (11, 12, 13) pour rendre une pluralité de connecteurs (20) étanches.

14. Joint (10) tel que revendiqué dans l'une quelconque des revendications précédentes, dans lequel le joint (10) est fabriqué à partir d'une matière élastomère.

15. Bloc de connecteurs (20) rendu étanche par un joint (10) tel que revendiqué dans l'une quelconque des revendications précédentes.

16. Ventilateur d'extraction électrique comportant un bloc de connecteurs (20) rendu étanche par un joint (10) tel que revendiqué dans l'une quelconque des revendications 1 à 14.
